# EUROPÄISCHE PATENTSCHRIFT

(11) **EP 2 301 651 B1**
(45) Veröffentlichungstag und Bekanntmachung des Hinweises auf die Patenterteilung: **23.05.2018**
(21) Anmeldenummer: 10171697.5
(22) Anmeldetag: 03.08.2010
(51) Int. Cl.: B01D 61/12, B01D 61/02, C02F 1/44

(54) **Verfahren zum Regeln einer Separationsanlage mit einem Umkehrosmoseelement und Umkehrosmoseanlage**
Method for regulating a separation assembly with a reverse osmosis element and reverse osmosis assembly
Procédé de réglage d'une installation de séparation dotée d'un élément d'osmose inverse et installation d'osmose inverse

(30) Priorität: 03.09.2009 DE 102009040049
(43) Veröffentlichungstag der Anmeldung: 30.03.2011
(73) Patentinhaber: Krones AG, 93073 Neutraubling (DE)
(72) Erfinder: Scheu, Dirk, 86735, Amerdingen (DE)
(74) Vertreter: Grünecker Patent- und Rechtsanwälte PartG mbB

(56) Entgegenhaltungen:
- WO-A1-00/58802
- JP-A- 3 284 323
- US-A1- 2004 222 158
- US-A1- 2007 295 650

## Beschreibung

Die Erfindung bezieht sich auf ein Verfahren zum Regeln einer Separationsanlage mit einem Umkehrosmoseelement und eine derartige Separationsanlage der in den Oberbegriffen der Ansprüche 1 und 3 erläuterten Art.

Eine Separationsanlage und ein Verfahren dieser Art sind aus der WO 96/41675 bekannt. Das bekannte Verfahren soll wechselnden Auslastungen der Separationsanlage, d.h. stark schwankenden Rohwassermengen Rechnung tragen, und auch in diesem Falle noch eine im Wesentlichen konstante Ausbeute, d.h. ein vorbestimmtes Verhältnis zwischen Permeat und Konzentrat liefern. Zu diesem Zweck wird der Konzentratfluss selbsttätig an den Rohwasserzufluss angepasst, und zwar so, dass diese beiden Flüsse ein konstantes Verhältnis zueinander aufweisen und beibehalten. Dadurch wird erreicht, dass die Rückführung von Konzentrat in den Rohwasserzufluss auch bei schwankender Kapazitätsauslastung selbsttätig angepasst wird. Der Rohwasserzufluss wird über ein Durchflussmessglied stromaufwärts der den Filterdruck bereitstellenden Pumpe, d.h. vor dieser Pumpe, festgestellt und zum Regeln des Strömungsquerschnittes, bzw. des Strömungswiderstandes, in der Konzentratableitung verwendet. Die Leistung der Pumpe bleibt jedoch unverändert, d.h. die Pumpe wird auf konstanten Druck geregelt. Durch diese Maßnahme wird zwar die Ausbeute konstant gehalten, ein Anteil des Leistungsvermögens der Pumpe jedoch verschenkt. Diese Verfahrensführung eignet sich besonders für Anlagen mit kleineren Mengendurchsätzen.

Bei einer Regelung der Rohwasserpumpe auf konstanten Vordruck werden beispielsweise Änderungen der Rohwassertemperatur nicht berücksichtigt. Wird bei einer Änderung der Rohwassertemperatur weiterhin auf konstanten Druck der Rohwasserpumpe geregelt, ergibt sich, je nach Temperaturänderung entweder eine Verminderung oder eine Erhöhung des Permeat- bzw. Konzentratflusses. Dadurch verschiebt sich die Ausbeute, so dass es im Extremfall zu schlagartigen Salz-Ausfällungen im Konzentrat kommen kann. Diese schlagartigen Ausfällungen verstopfen die Membrane, so dass eine zeit- und arbeitsaufwändige Reinigung notwendig ist.

In der US 2004/0222158 A1 wird ein Filtrationssystem zum Weichmachen von Wasser beschrieben, in dem die Permeatleistung geregelt wird. In der WO 00/58802 A1 und der US 2007/0295650 A1 werden Filtrationssysteme beschrieben, deren Regelung unter Verwendung von Drucksensoren erfolgt. Die WO 00/58802 beschreibt ein Verfahren und eine Vorrichtung zur Steuerung der Durchflussmenge bei einem Filtrationssystem. Die Steuerung erfolgt über ein Ventil, das auf Druckmesswerte eines Drucksensors stromaufwärts des Steuerventils, das heißt an einer dem Filterelement abgewandten Seite der Rohwasserleitung beaufschlagt wird.

Die US 2007/0295650 beschreibt ein Membranfiltrationssystem mit Konzentratrückleitung. Zwischen der Rohwasserpumpe und der Filtermembran ist auch hier ein Drucksensor angeordnet.

Die US 2004/0222158 beschreibt ein Nanofiltrationssystem dessen Ausbeute über die Permeatmenge geregelt wird.

Die JP 03284323 beschreibt ein Verfahren und eine Vorrichtung für ein Membranfiltrationssystem, bei dem eine Zirkuiationspumpe in Abhängigkeit von einer festgestellten Temperatur gesteuert wird.

In der JP 03284323 wird ein Filtrationssystem beschrieben, dessen Regelung unter Verwendung von Temperatursensoren erfolgt.

Der Erfindung liegt die Aufgabe zugrunde, ein Verfahren und eine Separationsanlage für Umkehrosmose-Filtration bereitzustellen, mit denen auf konstruktiv einfache Weise die Ausbeute auch beispielsweise bei Temperatur- oder Druckschwankungen im Zulauf konstant gehalten werden kann, ohne dass hierzu ein Puffergefäß für den Vorlauf notwendig ist.

Außerdem wird durch die qualitätsabhängige Spülung der Anlage mit Permeat neben Wasser auch die Einsatzmenge an Reinigungschemikalien gespart.

Die Aufgabe wird durch das Verfahren gemäß Anspruch 1 und die Separationsanlage gemäß Anspruch 3 gelöst.

Durch die erfindungsgemäße Regelung der Rohwasserpumpe über den von ihr erzeugten Durchfluss wird auf konstruktiv einfache und sehr effektive und feinfühlige Weise sichergestellt, dass die Permeation durch die Membrane unabhängig von äußeren Einflüssen konstant gehalten werden kann, so dass sich automatisch eine vorab eingestellte Ausbeute, d.h. ein vorab eingestelltes Verhältnis von Permeatmenge zu Konzentratmenge ergibt und dieses Verhältnis konstant gehalten wird. Dies geschieht, indem die Zufluss- und die Konzentratmenge konstant gehalten werden.

Vorteilhafte Weiterbildungen sind den Unteransprüchen zu entnehmen.

Durch die Änderung des Strömungsquerschnittes der Konzentratleitung in Abhängigkeit einer dort vorgenommenen Durchflussmessung kann die Ausbeute verändert werden.

Ein weiterer Vorteil, den die erfindungsgemäße Anlage bietet, ist eine qualitätsabhängige Reinigung, wobei der Reinigungserfolg tatsächlich überwacht (und nicht automatisch nach einem vorbestimmten Zeitablauf unterstellt wird), was bevorzugt durch eine Leitfähigkeitsmessung in der Konzentratableitung durchgeführt wird. Diese Maßnahme ist außer für die erfindungsgemäße Separationsanlage und das erfindungsgemäße Verfahren mit einer durchflussgeregelten Pumpe auch bei anders konstruierten Separationsanlagen und Verfahren einsetzbar.

Ein Ausführungsbeispiel der Erfindung wird nachfolgend anhand der einzigen Zeichnung näher erläutert.

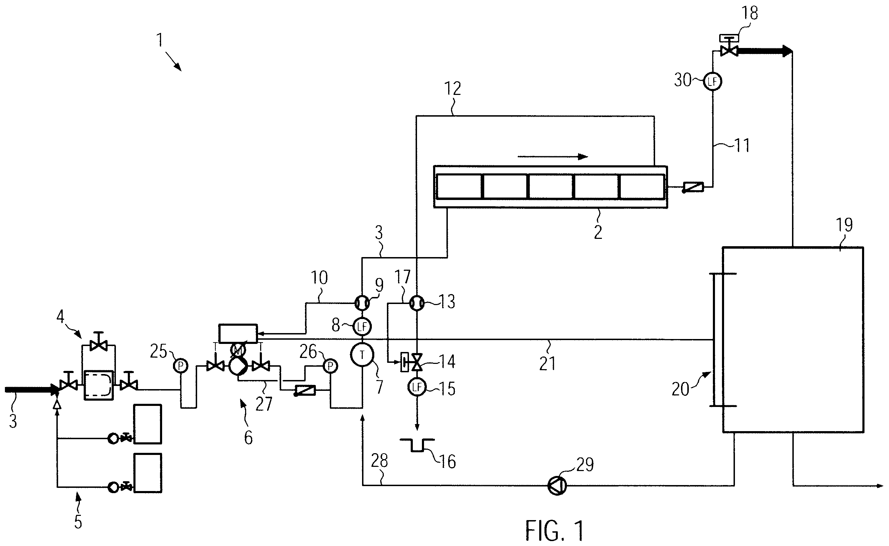

Fig. 1 zeigt in schematischer Darstellung eine erfindungsgemäße Separationsanlage 1 zur Durchführung des erfindungsgemäßen Verfahrens. Die Separationsanlage 1 enthält ein

Umkehrosmoseelement 2 herkömmlicher Bauart, das beispielsweise eine Vielzahl von Membranen aufweist, deren Durchlässigkeit auf die auszufilternden Moleküle abgestimmt ist. Im dargestellten Ausführungsbeispiel ist eine einzige Bank ersichtlich, die Anlage arbeitet jedoch auch mit den üblichen Mehrfach-Bänke.

Dem Umkehrosmoseelement 2 wird über eine Leitung 3 das zu filtrierende Rohwasser vorgelegt. Die Rohwasserleitung 3 passiert zunächst, wie dies üblich ist, einen Vorfilter 4, in dem gröbere mechanische Verunreinigungen entfernt werden. Gleichzeitig wird über eine entsprechend ausgebildete Einrichtung 5 die Härte stabilisiert. Dann gelangt das Rohwasser in einen Pumpenkomplex 6, der eine übliche Hochdruckpumpe mit Frequenzumrichter enthält. Die Pumpe stellt den vorbestimmten Volumenstrom bereit. Nach dem Verlassen des Pumpenkomplexes gelangt das Rohwasser über eine Temperaturmessung 7, eine Leitfähigkeitsmessung 8 in einen Durchflussmesser 9 üblicher und beliebiger Bauart. Bevorzugt ist der Durchflussmesser 9 ein induktiver Durchflussmesser (IDM). Der Durchflussmesser 9 ist über eine Signalleitung 10 mit dem Pumpenkomplex 6 verbunden. Nach dem Durchflussmesser gelangt das Rohwasser in das Umkehrosmoseelement 2.

Das Umkehrosmoseelement 2 verlässt eine Permeatleitung 11 für das gereinigte Wasser und eine Konzentratleitung 12 für salzbefrachtete Flüssigkeit erhöhter Konzentration. Die Konzentratleitung 12 gelangt über einen weiteren Durchflussmesser 13, der wiederum bevorzugt ein induktiver Durchflussmesser (IDM) ist, ein Regelventil 14 und eine Leitfähigkeitsmessung 15 in einen Ableitungskanal 16.

Der Durchflussmesser 13 in der Konzentratleitung 12 steht über eine Signalleitung 17 mit dem Regelventil 14 in Verbindung, so dass das Regelventil 14 in Abhängigkeit von der Durchflussmessung geregelt werden kann.

Die Permeatleitung 11 gelangt über ein Absperrventil 18 entweder direkt zum Verbraucher und/oder in einen Vorratstank 19, in dem Permeat vorgehalten werden kann. Der Vorratstank 19 ist mit einer Niveaumessung 20, dargestellt ist eine untere und eine obere Niveauelektrode, versehen. Die Niveaumessung ist über eine Signalleitung 21 mit der Pumpe 6 verbunden.

Beim Betrieb der Separationsanlage 1 wird zunächst die gewünschte Ausbeute (abhängig von der Art und der Menge der im Rohwasser enthaltenen, zu entfernenden Stoffe) und der Durchfluss festgelegt, der zum Erzeugen einer optimalen Permeation zum Erreichen der gewünschten optimalen Ausbeute notwendig ist. Die Anlage wird in Betrieb gesetzt und der Durchfluss über den Durchflussmesser 9 überwacht. Ändert sich die Durchflussmenge, beispielsweise durch Temperaturänderungen im Rohwasserzufluss, so wird die Pumpe derart geregelt, dass der Durchfluss wieder den vorbestimmten Wert erreicht. D.h. für dieses Beispiel, dass infolge der Temperaturänderung im Rohwasserzufluss sich dessen Viskosität verändert. So bedeutet beispielsweise eine tiefere Temperatur eine höhere Viskosität des Rohwassers, das wiederum einen verminderten Volumenstrom bedeutet, der in direktem Zusammenhang mit der Permeation durch die Membran steht. Eine nun erhöht geregelte Pumpendrehzahl bewirkt einen erhöhten Volumenstrom und somit wiederum eine mengenmäßig ausgeglichene Permeation durch die Membran.

Bei einem bevorzugten Ausführungsbeispiel wird der Durchfluss des Rohwassers auf 29,4 m³/h bei 10,5 bar bei 12°C festgelegt. Dieser Wert ergibt bei einer Ausbeute von 85 % einen Anteil von Permeat von 85 % und einen Anteil von Konzentrat von 15 %, d.h. 25 m³/h Permeat bei 0,3 barü und 4,4 m³/h Konzentrat bei 7,7 barü. Ändert sich die Temperatur des Rohwassers, so wird die Durchflussmenge des Rohwassers über den Durchflussmesser auf dem Wert bei 12°C gehalten, d.h. der Durchfluss wird entweder verringert oder erhöht, und zwar derart, dass die Ausbeute von 85 % Permeat und 15 % Konzentrat konstant bleibt.

Mit der erfindungsgemäßen Separationsanlage ist auch eine verbesserte Reinigung möglich, wobei jedoch die Reinigung auch bei anderen Separationsanlagen ohne durchflussgeregelte Pumpe einsetzbar ist. Erfindungsgemäß erfolgt die Reinigung qualitätsabhängig in Abhängigkeit der Messwerte der Leitfähigkeitsmessung 15 in der Konzentratleitung 12. Auf diese Weise wird sicher festgestellt, ob die in den Kanal 16 ablaufende Flüssigkeit (Konzentrat/Reinigungsflüssigkeit/Spülflüssigkeit) einen ausreichend geringen Salzgehalt enthält, um als sauber angesehen zu werden. Hierdurch wird sichergestellt, dass alle Salze entfernt sind und nicht aufgrund von Druckschwankungen noch Restsalze im System sind. Diese Spülmöglichkeit spart Spülflüssigkeit und verhindert das Scaling und Biofouling in Stillstandszeiten.

In Fig. 1 sind weitere Abwandlungen eingezeichnet, die optional vorgesehen sein können. So ist in Fig. 1 beispielsweise die Möglichkeit geschaffen worden, die Anlage auf eine herkömmliche Regelung umzuschalten. Dafür ist ein Vordrucksensor 25 vor der Pumpe 6 und ein Drucksensor 26 nach der Pumpe 6 vorgesehen. Über eine Signalleitung 27 werden die Signale übertragen, so dass bei Bedarf auf Vordruckerfassung mit dem Sensor 25 und Druckregelung der Pumpe 6 auf den Drucksensor 26 umgeschaltet werden kann.

Eine zweite optionale Ausgestaltung betrifft die Möglichkeit, die Anlage gegebenenfalls auch mit Permeat zu spülen. Zu diesem Zweck wird der Anlage 1 Permeat aus dem Vorratstank 19 (oder einer anderen Quelle) über die Leitung 28 mit der Pumpe 29 (frequenzgeregelt) zugeführt. Die Leitung 28 mündet bevorzugt stromaufwärts des Temperatursensors 7 in den Rohwasserstrom. Auch hier kann das Spülergebnis über die Leitfähigkeitsmessung in der Konzentratleitung überwacht werden.

Die Qualitätsüberwachung über die Konzentratableitung ermöglicht außerdem im Produktionsbetrieb ein bedarfsgerechtes Festlegen von Spülzeitpunkten. Somit wird bereits im Betrieb die optimale Standzeit der Membrane ermittelt, so dass es bereits hier zur Verminderung von Scaling und Biofouling durch zu langen Betrieb kommt. Außerdem wird durch das Vermeiden unnötig kurzer Zyklen die Lebzeit der Membrane durch die in Summe geringere Reinigungsbelastung erheblich erhöht.

Weiterhin kann in die Permeatleitung 11 ein weiterer Leitfähigkeitssensor 30 eingefügt werden, der eine zusätzliche qualitative Kontrolle der qualitätsabhängigen Ausspülung mit Permeat bietet. Zu diesem Zweck können die Messwerte der Leitfähigkeiten an den Leitfähigkeitssensoren 8 und 30 verglichen werden. Beim Spülen mit Permeat wird danach über den Leitungsweg 28 und die frequenzgeregelte Pumpe 29 solange gespült, bis die Leitfähigkeitsmessungen der Sensoren 8 und 30 identisch sind.

Die Separationsanlage bietet somit eine mengenabhängige Regelung von zwei Volumenströmen, wodurch Temperatur und Vordruckschwankungen ausgeglichen werden können. Eingegriffen wird dabei an der Rohwasser- und der Konzentrationsseite, d.h. beim Bezugszeichen 9 (Durchflussmesser) und 13 (Durchflussmesser). Es kann qualitätsabhängig mit Permeat und mit Chemie gespült werden. Dieses Spülen spart gegenüber dem herkömmlichen, zeitlich geregelten Spülen (das entweder zu kurz oder zu lang ist) Wasser und Reinigungsmittel. Scaling und Biofouling wird vermindert, da nicht zu lange gespült wird. Die Membranlebenszeit wird verlängert, da nicht zu oft und nur wenn notwendig und auch nur über die notwendige Zeitdauer gereinigt wird. Bei Bedarf kann auf herkömmliche Steuerung umgeschaltet werden.

## Patentansprüche

1. Verfahren zum Regeln einer Separationsanlage (1) mit einem Umkehrosmoseelement (2), einer Rohwasserpumpe (6), einer Konzentrat- und einer Permeatableitung (11, 12), wobei die Konzentratleitung (11) einen ersten Durchflussmengenmesser (13) und ein davon beaufschlagtes Regelventil (14) aufweist, wobei eine vorbestimmte Ausbeute, ausgedrückt als Verhältnis zwischen Permeat und Konzentrat, konstant gehalten wird, **dadurch gekennzeichnet, dass** zum Konstanthalten der Ausbeute und der Durchflussmenge des Rohwassers a) die Leistung der Rohwasserpumpe (6) in Abhängigkeit von einer Durchflussmengenmessung des Rohwassers zwischen der Rohwasserpumpe (6) und dem Umkehrosmoseelement (2) durch einen zweiten Durchflussmengenmesser (9) und b) das Regelventil (14) in Abhängigkeit von einer Durchflussmengenmessung durch den ersten Durchflussmengenmesser (13) geregelt wird, sodass in Abhängigkeit von der Durchflussmessung in der Konzentratleitung (12) der Strömungsquerschnitt der Konzentratleitung (12) verändert wird.

2. Verfahren nach Anspruch 1, **dadurch gekennzeichnet, dass** eine Spülung der Anlage in Abhängigkeit von einer Messung der Leitfähigkeit im Konzentrat erfolgt.

3. Separationsanlage (1) mit einem Umkehrosmoseelement (2), einer Rohwasserpumpe (6), einer Permeatableitung (11), einer Konzentratableitung (12) und einem Durchflussmessglied (9), **dadurch gekennzeichnet, dass** das Durchflussmessglied (9) zwischen der Rohwasserpumpe (6) und dem Umkehrosmoseelement (2) angeordnet und mit der Rohwasserpumpe (6) verbunden ist,
in der Konzentratleitung (12) ein Durchflussmengenmesser (13) und ein davon beaufschlagtes Regelventil (14) angeordnet ist und eine Regelung vorgesehen ist, die dazu ausgebildet ist, die Leistung der Rohwasserpumpe (6) in Abhängigkeit von einer Durchflussmengenmessung durch das Durchflussmessglied (9) zwischen der Rohwasserpumpe (6) und dem Umkehrosmoseelement (2) und das Regelventil (14) in Abhängigkeit von einer Durchflussmengenmessung durch den Durchflussmengenmesser (13) zu regeln, sodass eine vorbestimmte Ausbeute, ausgedrückt als Verhältnis zwischen Permeat und Konzentrat, sowie die Durchflussmenge des Rohwassers konstant gehalten wird.

4. Separationsanlage nach Anspruch 3, **dadurch gekennzeichnet, dass** die Permeatleitung (11) mit einem mit einer Niveaumesseinrichtung (20) versehenen Vorratstank (19) verbunden ist und die Niveaumesseinrichtung (20) mit der Rohwasserpumpe (6) verbunden ist.

5. Separationsanlage nach einem der Ansprüche 3 oder 4, **dadurch gekennzeichnet, dass** in der Konzentratableitung (12) eine Leitfähigkeits-Messeinrichtung (15) vorgesehen ist.

## Claims

1. Method of controlling a separation unit (1), comprising a reverse osmosis element (2), a raw water pump (6), a concentrate and permeate outlet conduit (11, 12), wherein the concentrate conduit (11) comprises a first flow rate meter (13) and a control valve (14) controlled by the same, wherein a predetermined yield given by a ratio of permeate and concentrate is kept constant, **characterized in that** for keeping the yield and flow rate of the raw water constant a) the capacity of the raw water pump (6) is controlled in response to a flow rate measurement of the raw water between the raw water pump (6) and the reverse osmosis element (2) via a second flow rate meter (9) and b) the control valve (14) is controlled in response to a flow rate measurement by the first flow rate meter (13) such that in response to the flow rate measurement in the concentrate conduit (11) the flow cross-section of the concentrate conduit (11) is adapted.

2. Method according to claim 1, **characterized in that** the unit is rinsed in response to a measurement of the conductivity in the concentrate.

3. Separation unit (1), comprising a reverse osmosis element (2), a raw water pump (6), a permeate outlet conduit (11), a concentrate outlet conduit (12) and a flow metering element (9), **characterized in that** the flow metering element (9) is disposed between the raw water pump (6) and the reverse osmosis element (2) and is connected to the raw water pump (6), a flow rate meter (13) and a control valve (14) controlled by the same are disposed in the concentrate conduit (12) and a control unit is provided that is configured to control the capacity of the raw water pump (6) in response to a flow rate measurement of the raw water between the raw water pump (6) and the reverse osmosis element (2) via a second flow rate meter (9) and the control valve (14) in response to a flow rate measurement by the first flow rate meter (13) such that a predetermined yield given by a ratio of permeate and concentrate and the flow rate of the raw water are kept constant.

4. Separation unit according to claim 3, **characterized in that** the permeate conduit (11) is connected to a storage tank (19) provided with a level gauge (20) and that the level gauge (20) is connected to the raw water pump (6).

5. Separation unit particularly according to claim 3 or 4, **characterized in that** a conductivity measuring means (15) is provided in the concentrate outlet conduit (12).

## Revendications

1. Procédé pour réguler une installation de séparation (1) comprenant un élément d'osmose inverse (2), une pompe d'eau brute (6), une conduite d'évacuation de concentrat et de perméat (11, 12), la conduite de concentrat (12) présentant un premier débitmètre d'écoulement (13) et une vanne de régulation (14) alimentée par celui-ci, un taux prédéterminé exprimé en tant que rapport entre perméat et concentrat, étant maintenu constant,
**caractérisé en ce que** pour le maintien constant dudit taux et du débit d'écoulement de l'eau brute, on régule a) la puissance de la pompe d'eau brute (6) en fonction d'une mesure de débit d'écoulement de l'eau brute entre la pompe d'eau brute (6) et l'élément d'osmose inverse (2) par un deuxième débitmètre d'écoulement (9), et b) la vanne de régulation (14) en fonction d'une mesure de débit d'écoulement par le premier débitmètre d'écoulement (13), de manière à ce que la section transversale d'écoulement de la conduite de concentrat (12) varie en fonction de la mesure de débit d'écoulement dans la conduite de concentrat (12).

2. Procédé selon la revendication 1, **caractérisé en ce qu'**un rinçage de l'installation est effectué en fonction d'une mesure de la conductivité dans le concentrat.

3. Installation de séparation (1) comprenant un élément d'osmose inverse (2), une pompe d'eau brute (6), une conduite d'évacuation de perméat (11), une conduite d'évacuation de concentrat (12) et un organe de mesure de débit (9), **caractérisée en ce que** l'organe de mesure de débit (9) est agencé entre la pompe d'eau brute (6) et l'élément d'osmose inverse (2) et est relié à la pompe d'eau brute (6), et
**en ce que** dans la conduite de concentrat (12) est agencé un débitmètre d'écoulement (13) et une vanne de régulation (14) alimentée par celui-ci, et il est prévu une régulation qui est conçue pour réguler la puissance de la pompe d'eau brute (6) en fonction d'une mesure de débit d'écoulement par un deuxième débitmètre d'écoulement (9) entre la pompe d'eau brute (6) et l'élément d'osmose inverse (2), et pour réguler la vanne de régulation (14) en fonction d'une mesure de débit d'écoulement par le débitmètre d'écoulement (13), de manière à ce qu'un taux prédéterminé, exprimé en tant que rapport entre perméat et concentrat, ainsi que le débit d'écoulement de l'eau brute, soient maintenus constants.

4. Installation de séparation selon la revendication 3, **caractérisée en ce que** la conduite de perméat (11) est reliée à un réservoir de réserve (19) doté d'un dispositif de mesure de niveau (20), et le dispositif de mesure de niveau (20) est relié à la pompe d'eau brute (6).

5. Installation de séparation selon l'une des revendications 3 ou 4, **caractérisée en ce que** dans la conduite d'évacuation de concentrat (12) est prévu un dispositif de mesure de conductivité (15).
